# EUROPÄISCHE PATENTSCHRIFT

(11) **EP 3 044 052 B1**
(45) Veröffentlichungstag und Bekanntmachung des Hinweises auf die Patenterteilung: **20.06.2018**
(21) Anmeldenummer: 14814687.1
(22) Anmeldetag: 05.09.2014
(51) Int. Cl.: B60S 9/02

(54) **STÜTZE ZUR UNTERSTÜTZUNG UND ZUM AUSGLEICH EINES POSITIONSVERSATZES VON EINEM GEPARKTEN SATTELANHÄNGER**
JACK FOR SUPPORTING AND COMPENSATING FOR A SHIFT IN POSITION OF A SEMI-TRAILER
BÉQUILLE POUR SOUTENIR ET COMPENSER UN DÉCALAGE DE POSITION D'UNE SEMI-REMORQUE PARQUÉE

(30) Priorität: 10.09.2013 DE 102013015477
(43) Veröffentlichungstag der Anmeldung: 20.07.2016
(73) Patentinhaber: KOSCHINAT, Hubert, 63768 Hösbach (DE)
(72) Erfinder: KOSCHINAT, Hubert, 63768 Hösbach (DE)
(86) Internationale Anmeldenummer: PCT/DE2014/000461
(87) Internationale Veröffentlichungsnummer: WO 2015/035972

(56) Entgegenhaltungen:
- EP-A2- 2 112 040
- WO-A1-2010/100038
- DE-A1- 4 003 414
- DE-A1- 4 426 361
- DE-U1-202008 015 984

## Beschreibung

Die vorliegende Erfindung betrifft eine Stütze zur Unterstützung und zum Ausgleich eines Positionsversatzes von einem geparkten Sattelanhänger, bestehend aus einem äußeren Stützenrohr und einer Innenstütze, die teleskopisch in das äußere Stützenrohr einschiebbar ist und die aus einem Stützenoberteil und einem Stützenunterteil besteht, die über ein Schwenklager gelenkig miteinander verbunden sind, wobei das untere Ende des Stützenunterteils starr mit einem Rollsegment verbunden ist und die Außenfläche des äußeren Stützenrohrs zumindest an der zur Innenstütze weisenden Kante vollumfänglich geschlossen ist.

Auf aktuellem Stand der Technik wird beim Trennen eines Sattelanhängers von der Sattelzugmaschine zum Abstellen der vordere Teil des Sattelanhängers durch die in der Regel paarweise angeordneten Stützen abgestützt und zwar zumeist am Fahrzeugrahmen, wie z.B. die DE 40 03 414 A1 zeigt.

Derartige Stützen bestehen aus einem äußeren Stützenrohr, in das vor der Abfahrt eine Innenstütze teleskopisch eingeschoben wird, sodass eine ausreichende Bodenfreiheit gewährleistet ist. Zum Abstellen des Sattelanhängers wird die Innenstütze wieder abgesenkt und trägt das Vorderteil des Sattelanhängers. Dadurch verbleibt dieser auch ohne Zugmaschine in etwa horizontaler Position. Zum erneuten Verbinden fährt die Zugmaschine mit ihrer Sattelkupplung unter den vorderen Teil des Sattelanhängers, verriegelt die Sattelkupplung, verbindet die Pneumatikleitungen und zieht die Stützen wieder ein.

Ein typisches Merkmal der bekannten Stützen für luftgefederte Sattelanhänger ist ein verschwenkbares Rollsegment am unteren Ende jeder ausfahrbaren Innenstütze, den z.B. die DE 40 03 414 A1, DE 44 26 361 C2 und EP 0 972 687 B1 zeigen. Das Rollsegment ist ein Teil eines Rades, das sich auf einer Fläche abrollt, jedoch nur für eine begrenzte Strecke, deren Länge von der gekrümmten Abrollfläche des Rollsegmentes vorgegeben wird. Dieses Rollsegment gleicht bei längeren Standzeiten den Positionsversatz in Fahrzeuglängsrichtung aus, der die folgende Ursache hat:
Wegen der zulässigen Undichtigkeiten im Luftfedersystem sacken die Luftfederbälge zwischen den Längslenkern und dem Fahrzeugrahmen allmählich in sich zusammen, so dass sich der hintere Teil des Sattelanhängers absenkt.

Die zumeist übliche Achsaufhängung am Fahrzeugrahmen des Sattelanhängers sind Schwingarme, die an einem Ende gelenkig mit dem Fahrzeugrahmen verbunden sind und an ihrem anderen Ende jeweils ein Rad tragen und mit einem Luftfederbalg gegen den Fahrzeugrahmen abgestützt werden. Die Schwingarme sind in Fahrtrichtung des Anhängers ausgerichtet, weshalb sie auch Längslenker genannt werden. Die Bremsen des Sattelanhängers werden in abgesatteltem Zustand automatisch blockiert, so dass sich die Räder nicht mehr drehen können. Sacken nun die Luftfederbälge aufgrund von Luftverlust ein, senkt sich der hintere Teil des Sattelanhängers ab, wobei die Längslenker in Richtung Fahrzeugrahmen geschwenkt werden. Da die gebremsten Räder fest mit den Längslenkern verbunden sind, rollen sie während des Absenkens auf der Abstellfläche und drücken den Sattelanhänger in Fahrtrichtung.

Bei den derzeit an Nutzfahrzeugen weit verbreiteten Raddurchmessern und bei den für Luftfederaggregaten üblichen Senkwegen kann dieser horizontale Verschiebeweg - auch Positionsversatz genannt - bis zu 15 cm betragen. Um diesen Weg muss sich auch das auf dem Parkplatz aufstehende Ende der ausgefahrenen Stütze gegenüber dem Anhänger bewegen können. Kann es das nicht, wird insbesondere die Innenstütze einer derart hohen Biegespannung ausgesetzt, dass sie abknicken kann. Um dies zu vermeiden, wurden schwenkbare Rollsegmente entwickelt, die den entstehenden horizontalen Positionsversatz ausgleichen können. So beschreiben die DE 40 03 414 A1, DE 44 26 361 C2 und EP 0 972 687 B1 schwenkbar gelagerte Rollsegmente, die sich auf Abrollplatten in Fahrzeuglängsrichtung abrollen. Die DE 37 05 498 A1 zeigt ein Rollsegment, welches sich ohne Abrollplatte direkt auf der Abstellfläche, z. B. einem Parkplatz abstützt.

In allen vorgenannten Fällen ist der Radius des Rollsegmentes in seiner Größe nicht begrenzt, so dass er für das maximal zulässige Gewicht des Sattelanhängers ausreichend dimensioniert werden kann. Nachteiligerweise ist ein so groß dimensioniertes Rollsegment jedoch so viel breiter und/oder länger als der Querschnitt der Stütze, dass es nicht mehr in deren Innenraum hineinpasst. Deshalb befindet sich auch im eingefahrenen Zustand der Stütze das Rollsegment immer noch größtenteils unterhalb und außerhalb des äußeren Stützenrohres. Daraus entsteht der wesentliche Nachteil, dass es die minimale Bauhöhe der eingefahrenen Stütze merklich vergrößert.

Um diesen Nachteil zu entschärfen, beschreibt die DE 20 2008 015 984 U1, dass "das Außenrohr der Stütze an deren unterer Kante mit offenen Aussparungen versehen wird. Damit wird erreicht, dass die über das äußere Stützenrohr überstehenden Teile des Rollsegmentes und/oder dessen Lagerung beim Einfahren anstatt an das Stützenrohr anzustoßen etwas weiter nach oben in die Aussparung hinein bewegt werden können.

Ungünstigerweise schwächt diese Maßnahme das äußere Stützenrohr und bedingt zur Wiedererlangung einer ausreichenden Biegefestigkeit der Stütze als weitere Maßnahme eine Wandverstärkung des Stützenrohres im Bereich der Aussparungen und oberhalb davon. Das Aussparen und die notwendige Verstärkung stellen einen bedeutenden Aufwand dar."

Alternativ dazu schlägt die DE 20 2008 015 984 U1 vor, den Teil des Rollsegmentes oberhalb des eigentlichen Abrollradius mit einem so geringen Querschnitt auszubilden, dass er in das äußere Stützenrohr hineinpasst. Es entsteht eine Innenstütze, die aus einem Stützenoberteil und einem Stützenunterteil besteht, die über ein Schwenklager gelenkig miteinander verbunden sind.
Nachteiligerweise ragt das verbleibende Rollsegment im eingefahrenen Zustand der Stütze vollständig nach unten hin über das äußere Stützenrohr hinaus und vergrößert so die minimale Bauhöhe.

Das Dokument WO 2010 1000 38 A offenbart eine Stütze, die aus einem äußeren Stützenrohr und einer Innenstütze besteht, die teleskopisch in das äußere Stützenrohr einschiebbar ist. Um im eingeschobenen Zustand eine möglichst geringe Bauhöhe der Stütze zu erreichen, ist das äußere Stützenrohr an seiner Unterkante durch zwei nach unten hin offene Aussparungen unterbrochen. In diese Aussparungen kann die Schwenkachse des Rollsegmentes hinein gefahren werden. Der wesentliche Nachteil ist jedoch die gravierende Schwächung des äußeren Stützenrohres, die durch eine massive und daher gewichtige und teure Wandverstärkung kompensiert werden muss.

Ziel der vorliegenden Erfindung ist, bei einer Stütze mit geringstmöglichem Querschnitt und Eignung für luftgefederte Sattelanhänger die vorgenannten Nachteile dadurch zu beseitigen, dass die Stütze im eingefahrenen Zustand auf eine möglichst geringe Bauhöhe zusammen geschoben wird, vorzugsweise so gering, dass sie unterhalb der Rahmenlängsträger befestigt werden kann, wobei der Materialbedarf, das Gewicht und die Kosten reduziert werden sollen und die Montage der Stützen am Fahrzeugrahmen zu vereinfachen ist. In einer Variante soll die Stütze am durchlaufenden Profil des Rahmenlängsträgers lösbar befestigt werden, ohne dass am Längsträger selbst Veränderungen vorgenommen werden müssen.

Als Lösung schlägt die Erfindung vor, dass die Innenstütze aus einem Stützenoberteil und einem Stützenunterteil besteht, die über ein Schwenklager gelenkig miteinander verbunden sind, wobei das untere Ende des Stützenunterteils starr mit einem Rollsegment verbunden ist und die Außenfläche des äußeren Stützenrohrs zumindest an der zur Innenstütze weisenden Kante vollumfänglich geschlossen ist, wobei das Rollsegment wannenartig geformt ist und im eingefahrenen Zustand der Stütze das äußere Stützenrohr in das Rollsegment hineinragt.

Dieses Rollsegment kann nicht mit in das äußere Stützenrohr hinein geschoben werden, weil seine Länge größer als der Querschnitt des Stützenunterteils ist. Der Grund dafür ist, dass das Rollsegment in der Praxis mit der Länge seines Abrollumfangs einen Positionsversatz in einer Richtung bis zu 15 cm ausgleichen muss. Ein derart großer Querschnitt des äußeren Stützenrohrs in Längsrichtung überschreitet in der Praxis jedoch das von der Tragkraft her erforderliche Maß ganz deutlich, was Gewicht und Kosten unnötig erhöhen würde.

Damit das erfinderische Rollsegment die minimale Bauhöhe der eingefahrenen Stütze nur marginal vergrößert, bevorzugt die Erfindung als Rollsegment ein eindimensional gekrümmtes Stahlblech, das zu beiden Seiten über das Stützenunterteil herausragt.

Dessen wesentlicher Vorzug ist, dass es die gesamte Bauhöhe der eingefahrenen Stütze nur um die Materialstärke des Bleches erhöht. Zu beachten ist jedoch, dass bei maximaler Verschwenkung des Stützenunterteils die frei abstehenden Enden des gekrümmten Stahlblechs überlastet werden könnten oder eine so große Materialstärke erfordern, dass ein derartiges Rollsegment zu schwer werden würde.

Es ist daher ein Merkmal dieser Erfindung, das Rollsegment und seine Abrollfläche wie eine Wanne zu formen, z.B. als ein Pressteil aus Stahlblech. An die zylindrisch oder zylinderähnlich geformte Abrollfläche werden als Verstärkung etwa vertikal dazu ausgerichtete Seitenwände angeformt, die das Rollsegment zu einer Wanne ergänzen.

Am "tiefsten" Punkt der konkav geformten Seite dieser Wanne wird das Stützenunterteil befestigt, z.B. angeschweißt oder angeschraubt. Beim Einfahren der Stütze schiebt sich das Stützenunterteil immer weiter in das äußere Stützenrohr hinein und die Wanne rückt immer näher an das äußere Stützenrohr heran bis - von der Seite gesehen - die Seitenwände der "Wanne" das äußere Stützenrohr überlappen. Im voll eingefahrenen Zustand der Stütze ragt also das äußere Stützenrohr in die Wanne hinein. Dazu muss zwischen dem Stützenunterteil und den Seitenwänden des Rollsegmentes eine - relativ schmale - Gasse frei gelassen werden.

Wenn die Wanne z.B. aus Stahlblech geformt ist, so erhöht sie die gesamte Stütze im eingefahrenen Zustand nur noch um die Blechstärke, zuzüglich der Krümmung der Abrollfläche, in der Praxis also nur noch um wenige Millimeter. Dank dieser wannenartigen Formung kann die Abrollfläche größer als die Querschnittsfläche des Stützenunterteils dimensioniert werden. Die von der Stütze weiter zu leitende Last wird also auf eine relativ große Fläche verteilt, was bei einem großen Positionsversatz oder bei einer unbefestigten Abstellfläche des Sattelanhängers von Vorteil ist.

In einer konstruktiv einfachen Variante ist die Abrollfläche genau als Segment eines Kreiszylinders geformt, hat also in allen Punkten ihrer Oberfläche stets den gleichen Abstand zur Schwenkachse, was auch als ein "konstanter Radius" bezeichnet werden könnte.

Die Abrollfläche kann jedoch auch mit "unterschiedlichen Radien" geformt werden, z.B. als Oval oder als Ellipse. Dann kann der Sattelanhänger trotz eines Einsinkens der Luftfederbälge in einer weitgehend gleich bleibenden Horizontallage gehalten werden, was beim erneuten Ankuppeln einer Zugmaschine vorteilhaft ist. Alternativ kann die Abrollfläche aus einer oder mehreren kurzen Teilflächen oder Teilebenen, die aneinandergereiht sind, bestehen.

Wie erläutert, besteht die Innenstütze aus drei Teilen, nämlich dem Stützenoberteil, dem Stützenunterteil und dem Schwenklager, das beide Stützenteile miteinander verbindet. Alle drei Teile tauchen im "eingefahrenen" Zustand vollständig in das äußere Stützenrohr ein. Damit das Schwenklager in das äußere Stützenrohr eingefahren werden kann, darf es nicht nach außen über die Innenstütze hinausragen. Eine weitere, erfinderische Teilidee ist, das Schwenklager in zwei Gelenkteile aufzuteilen, die zueinander beabstandet sind. Dieser Abstand soll so groß sein, dass eine Gewindespindel oder ein anderer Antrieb für die Verschiebung der Innenstütze zwischen beiden Gelenkteilen hindurch geführt werden kann.

In einer interessanten Ausführungsvariante besteht jedes Gelenkteil des Schwenklagers aus einem kurzen Lagerstummel und einer dazu konzentrischen Lagerschale als Gleitlager sowie einem Haltering, der Stummel und Schale umschließt und dadurch zusammenhält. Weil das radiale Widerstandsmoment des gesamten Schwenklagers wenigstens so groß sein sollte, wie die Belastbarkeit der beiden anderen Teile der Innenstütze, folgt daraus, dass die Lagerstummel, die Lagerschalen sowie die umschließenden Halteringe dem erforderlichen Widerstandsmoment entsprechend dimensioniert sein müssen.

Die zuvor schon erwähnte Gewindespindel ist als Hubantrieb für die Innenstütze sehr weit verbreitet, denn sie ist einfach, robust und langlebig sowie wirtschaftlich zu fertigen. Entsprechend der Aufgabenstellung der Erfindung, die Bauhöhe der gesamten Stütze zu reduzieren, muß auch die Höhe der betriebsnotwendigen Anbauten an den Enden der Gewindespindel verkleinert werden.

Die Erfindung schlägt eine Gewindespindel vor, die am oberen Ende des äußeren Stützenrohrs drehbar gelagert ist und mit ihrem Gewinde in ein Gewindelager eingreift, das mit dem oberen Ende des Stützenoberteils fest verbunden ist. Eine derartige Gewindespindel benötigt noch einen Anschlag, der verhindert, dass die Spindel aus dem Gewindelager heraus gedreht wird, wodurch das Stützenunterteil heraus fallen würde. Nahe liegend und bekannt ist es, dafür am unteren Ende der Gewindespindel einen mechanischen Anschlag anzufügen, dessen Durchmesser größer als der des Gewindes ist und der deshalb am Ende des Ausschiebens vom Stützenunterteil am Gewindelager anschlägt.

Es ist eine weitere, wesentliche Teilidee der Erfindung, dass die Funktion der Begrenzung von dem äußeren Stützenrohr zusammen mit dem Stützenoberteil übernommen wird. Dafür platziert die Erfindung zwei Führungshülsen zwischen dem Stützenoberteil und dem äußeren Stützenrohr. Die obere Führungshülse ist außen auf dem Stützenoberteil nahe dessen oberem Ende befestigt und kann auf der Innenfläche des äußeren Stützenrohrs entlang gleiten. Die untere Führungshülse ist auf der Innenseite des äußeren Stützenrohrs nahe dessen unterem Ende - vorzugsweise lösbar - befestigt und kann auf den Außenflächen des Stützenoberteils und des Stützenunterteils gleiten. Das äußere Stützenrohr und die Innenstütze gleiten also nicht direkt aufeinander, sondern werden gegeneinander nur durch die beiden Führungshülsen geführt.

Die untere Führungshülse wird erst dann an des untere Ende des äußeren Stützenrohres montiert und daran befestigt, nachdem das Stützenoberteil mit der festen Führungshülse an dessen oberem Ende in das äußere Stützenrohr eingeschoben wurde.

Wenn das Stützenoberteil um den maximal zulässigen Weg nach unten aus dem äußeren Stützenrohr herausgeschoben ist, stoßen die Stirnkanten der beiden Führungshülsen aneinander und begrenzen auf diese Weise den Hub. Das Gewinde auf der Gewindespindel muss dann nur noch so lang sein, dass es in das Gewindelager hineinreicht.

Dabei sollte die Summe aus der Höhe der beiden Führungshülsen die für eine ausreichende Knickfestigkeit der Stütze erforderliche Überlappung zwischen dem Stützenoberteil und dem äußeren Stützenrohr nicht unterschreiten. In der Regel sollte die genannte Summe nicht kleiner sein als die Breite des Stützenoberteils. Zusätzlich verstärken die Führungsprofile die Enden des Stützenoberteils und des äußeren Stützenrohrs, welche in ausgefahrenem Zustand durch ggf. auftreffende Seitenkräfte besonders stark beansprucht werden.

Ein weiterer Vorzug dieser Führungshülsen ist, dass für das äußere Stützenrohr und für die Innenstütze kostengünstige, geschweißte Rohre verwendet werden können, die nicht besonders gerichtet werden müssen, sondern von der sonst nötigen, exakten Geradheit in dem durch das Verschweißen bedingten Verzug abweichen dürfen.

Bei einer erfindungsgemäßen Stütze ergibt die Summe aus den maximal ausfahrbaren Längen des Stützenoberteils, der Höhe des Schwenklagers und der Höhe des Stützenunterteils abzüglich der geringen Höhe des Rollsegmentes in seiner Mitte die maximal erreichbare Bodenfreiheit zwischen der Unterkante der eingefahrenen Stütze und der Abstellfläche, wie z.B. einem Parkplatz. Untersuchungen haben ergeben, dass in der Praxis ca. 25 cm ausreichen. Mit einer zusätzlichen Hubreserve von wenigstens 5 cm ergibt sich ein für Lkw-Sattelanhänger ausreichender Gesamthub.

Ein erfindungsgemäßes Rollsegment ist für das direkte Aufsetzen und Abrollen auf Abstellflächen mit einer hohen Oberflächenfestigkeit, wie z.B. Betonflächen gut geeignet. Wenn z.B. ein Betreiber von Fahrzeugflotten grundsätzlich nur das Absatteln der Anhänger auf solchen Flächen vorsieht, ist bei direktem Kontakt des Rollsegmentes zu einer solchen Abstellfläche der erforderliche Ausgleich des Positionsversatzes gesichert.

Möglicherweise kann jedoch die Abstellfläche des Parkplatzes so weich sein, dass die Rollsegmente nicht mehr mit einer angenähert linienförmigen Kontaktfläche darauf aufsetzen, sondern sich darin eindrücken können, was den Ausgleich eines Positionsversatzes wesentlich erschwert. Bei derartigen Abstellflächen ist es bekannt und vorteilhaft, jedes Rollsegment jeweils auf eine Abrollplatte zu stellen, die dank ihrer sehr viel größeren Fläche nicht in die Abstellfläche einsinkt. Diese Abrollplatten werden üblicherweise mittels mindestens zweier Zugfedern an die Rollsegmente gezogen und sind meist zusätzlich für den Fall eines Versagens der Zugfedern mittels Sicherungsbolzen gegen Verlieren gesichert.

Zu beachten ist, dass die gesamte, vertikale Länge der eingefahrenen Stütze von der Unterkante der Abrollplatte bis zur Oberkante grundsätzlich größer als der maximal erreichbare Hub ist und zwar aus den folgenden Gründen: Zum ersten müssen sich das äußere Stützenrohr und die Innenstütze im ausgefahrenen Zustand noch überlappen, in der Praxis etwa um die Breite ihres Querschnittes. Zum zweiten muss ein Antrieb für das Anheben und Absenken der Innenstütze platziert werden, wie z.B. ein Getriebe am oberen Ende des äußeren Stützenrohres.

Mit den Merkmalen einer erfindungsgemäßen Stütze wird es erstmals möglich, die Bauhöhe so weit zu reduzieren, dass die Stütze unterhalb eines Fahrzeugrahmens befestigt werden kann und nicht mehr - wie bisher üblich - an der Seite des Fahrzeugrahmens.

Nach bisherigem Stand der Technik sind zur Stabilisierung und Zentrierung der unbelasteten Abrollplatte meistens je eine Feder in der linken und in der rechten Hälfte der Abrollplatte angelenkt, deren anderes Ende mit dem Rollsegment verbunden ist. Es ist eine weitere, innovative Idee der Erfindung, stattdessen nur eine einzige Feder einzusetzen, die im Inneren des Stützenunterteils angeordnet ist. Diese Feder ist zwischen dem Rollsegment einerseits und einer im Stützenunterteil angeordneten Brücke zusammen mittels einer verdrehsicheren Druckplatte - wie z.B. eines Gewindedeckels - eingespannt und wird im Falle der Montage einer Abrollplatte mittels einer Zugstange oder eines sonstigen Zugelements über den auf der Feder positionierten Deckel weiter verspannt, sodass die Abrollplatte fest gegen das Rollsegment gehalten wird.

Bei außermittiger Belastung der Abrollplatte während eines Positionsversatzes wird die Feder weiter zusammengedrückt und ermöglicht so das Rollen des Rollsegmentes auf der Abrollplatte. Aber wenn die Abrollplatte unbelastet ist, zieht die Feder die Abrollplatte an die Öffnung heran und hält sie dort fest. So wird verhindert, dass die unbelastete Abrollplatte beim Absenken der Stütze nur mit einer Kante auf die Abstellfläche auftrifft und/oder während der Fahrt haltlos auf dem Rollsegment aufschlägt. Außerdem ist die Feder selbst im Innenraum des Stützenunterteils gut vor schädlichen Einflüssen von außen geschützt und beansprucht keinen zusätzlichen Bauraum.

Das Rollsegment ist im einfachsten Fall ein Zylindersegment, das die Abrollplatte entlang einer Linie berührt. Wenn eine unbelastete Abrollplatte von der Feder zu der Öffnung im Rollsegment gezogen wird, dann liegt sie zwar auf dieser Linie des Rollsegmentes auf, befindet sich aber noch in einem labilen Zustand, weil sie gegenüber dem gekrümmten Rollsegment hin- und her pendeln kann.

Um diese Pendelbewegungen und die daraus resultierenden Geräusche zu unterbinden, empfiehlt die Erfindung, das Rollsegment um die Öffnung für die Feder herum abzuplatten. Dann liegt die unbelastete, ebene Abrollplatte auf der abgeplatteten Fläche nahe der Öffnung auf und befindet sich dadurch in einem stabilen Zustand.

In einer etwas aufwendigeren Variante soll sich die Abrollplatte bei einer unebenen Abstellfläche auch quer zur Fahrtrichtung des Sattelanhängers verschwenken können. Dafür soll das Rollsegment ähnlich wie der Reifen eines Motorrades als Segment eines Torus geformt werden und die Abrollplatte komplementär dazu ausgebildet werden, nämlich als ein längliches, konkaves Zylindersegment - auch als Rinne zu bezeichnen. Auch für diese Variante ist eine Stabilisierung der unbelasteten Abrollplatte erreichbar: In den Torus des Rollsegmentes kann nahe der Öffnung für die Feder ein kurzes Zylindersegment - also ein "grader" Abschnitt - eingefügt werden. Die "rinnenförmige", unbelastete Abrollplatte liegt dann in einem stabilen Zustand auf der zylindrischen Fläche nahe der Öffnung auf.

Da die Verankerung einer Zugfeder im Inneren des Stützenunterteils zwar möglich, aber aufwendig und schwierig zu montieren ist, schlägt die Erfindung vor, stattdessen eine Druckfeder zu verwenden, die sich mit ihrem ersten Ende auf der Innenseite des Rollsegmentes abstützt. Das zweite Ende der Feder ragt in den Innenraum des Stützenunterteils hinein und ist dort über eine Druckplatte und eine Zugstange mit der Abrollplatte verbunden.

Wenn die Druckfeder als eine Schraubenfeder ausgeführt ist, verläuft die Zugstange vorzugsweise durch den Innenraum der Schraubenfeder. Wenn als Zugstange eine zentrale Schraube gewählt wird, dann kann sie in ein Innengewinde in der Druckplatte eingeschraubt werden. Diese Ausführung der Zugstange wird deshalb auch als Zentralschraube bezeichnet. Eine derartige Druckplatte wird hier als ein "Gewindedeckel" bezeichnet. Ein umlaufender Bund oder ein Konus auf diesem Gewindedeckel zentriert die Schraubenfeder in der Mitte, so dass die Kraft der Druckfeder als eine Zugkraft in die Schraube abgeleitet wird.

Da die Feder dann besonders wirkungsvoll ist, wenn sie mit einer Vorspannung eingebaut wird, wird als Montagehilfe eine Brücke - z.B. aus einem zweifach abgewinkelten und angenähert zu einem U geformten Flachstahl - vorgeschlagen, welche die Öffnung im Rollsegment zentral überwölbt. Die Brücke wird entweder im Stützenunterteil oder auf der Innenseite des Rollsegmentes befestigt. Wesentlich ist, dass die zur Öffnung des Rollsegmentes hin weisende Unterseite der Brücke komplementär zum Gewindedeckel geformt ist. Der Gewindedeckel kann z.B. eine quadratische oder eine andere, nicht kreisförmige Außenkontur aufweisen, die formschlüssig mit der Brücke verbunden werden kann, sodass beim Einschrauben der Zentralschraube in den Gewindedeckel die Brücke ein entsprechendes Gegendrehmoment aufnehmen kann.

In der Praxis ist nach dem Befestigen des Rollsegmentes am Stützenunterteil dessen Innenraum nicht mehr gut zugänglich. Die Montage der Feder von der oberen, noch offenen Seite des Stützenunterteils her ist mühsam. Zur Vereinfachung der Montage schlägt die Erfindung vor, dass schon vor dem Befestigen des Rollsegmentes am Stützenunterteil die Brücke auf dem Rollsegment angebracht wird. Dann werden der Gewindedeckel und die zusammengedrückte Zugfeder unter die Brücke herunter geschoben und die Feder entlastet, bis der Gewindedeckel formschlüssig auf die Unterseite der Brücke gedrückt wird.

Im nächsten Schritt werden das Rollsegment mitsamt der Brücke, dem Gewindedeckel und der Druckfeder an das Stützenunterteil angeschweißt oder auf andere Art montiert. Danach kann von der Außenseite des Rollsegmentes her die Abrollplatte mittels der Zentralschraube an den Gewindedeckel angeschraubt werden, obwohl der Gewindedeckel in diesem Zustand weder sichtbar noch direkt zugänglich ist.

Ein weiterer, interessanter Vorteil dieser Ausführungsvariante ist, dass nach dem zuvor beschriebenen Einbau der Druckfeder mit Gewindedeckel und Brücke das Rollsegment ohne eine Abrollplatte direkt auf Betonflächen oder auf andere, feste Abstellflächen aufsetzen und darauf abrollen kann. Wenn später ein Abstellen auf weicheren Flächen erforderlich wird, kann eine Abrollplatte - wie beschrieben - mittels Zentralschraube schnell nachgerüstet werden.

Die Ausführungsvariante der Sicherung der Abrollplatte durch eine einzige, zentrale Feder ist eine sehr elegante und bei ausreichender Dimensionierung der Feder auch robuste Lösung. In jeder Phase sichert die Druckfeder einen Kontakt der Abrollplatte zum Rollsegment.

Wenn die Zugstange als eine Zentralschraube ausgeführt ist, die mit einer Druckfeder zusammenwirkt, schlägt die Erfindung vor, dass die Zugstange einen Kugelkopf trägt. Dieser Kugelkopf ist zum Beispiel an den Schaft der Zentralschraube angeformt - wie auch an Befestigungsbolzen für PKW -Räder üblich - oder er wird gebildet, indem unter dem Kopf der Zentralschraube eine Kugelkopfunterlegscheibe aufgesteckt wird.

Dieser Kugelkopf wird in der Abrollplatte in einer dazu komplementär geformten Auswölbung gelagert. Die Auswölbung ist von einem ausreichend breiten und in Schwenkrichtung länglichen Schlitz durchbrochen, durch den der Schaft der Zugstange - auch als Zentralschraube bezeichnet - hindurch verläuft.

Ein Vorteil dieser Konstruktion ist, dass bei einem Bruch der Feder die Abrollplatte nicht verloren geht, sondern durch die Zugstange und den Gewindedeckel weiter gehalten wird.

Anstelle der zuvor beschriebenen, einzigen zentralen Feder können auch zwei oder mehr Federn eingebaut werden. Sie können quer zur Fahrtrichtung auf einer Linie nebeneinander angeordnet werden oder über den Querschnitt des Stützenunterteils verteilt werden. Ein Vorzug von zwei, in Fahrtrichtung hintereinander angeordneten Federn ist die aktive Stabilisierung der unbelasteten Abrollplatte in der Mittellage. Die Erfindung bevorzugt jedoch eine einzige, zentrale Feder als die wirtschaftlich sinnvollste Alternative.

Wenn eine erfindungsgemäße Stütze auch auf einer unebenen und/oder feuchten und/oder verschneiten und/oder anders verunreinigten Abstellfläche eingesetzt werden soll, könnten Verunreinigungen zwischen Rollsegment und Abrollplatte geraten. Durch die Verunreinigungen und/oder wegen der Neigung könnte das Rollsegment auf der Abrollplatte gleiten, wodurch die Feder oder die Zugstange, die das Rollsegment mit der Abrollplatte verbindet, beschädigt oder sogar abgerissen werden könnte.

Um das zu vermeiden, muss die Relativbewegung zwischen dem Rollsegment und der Abrollplatte auf eine reine Abrollbewegung beschränkt werden. Dafür empfiehlt die Erfindung eine Verzahnung zwischen der Abrollplatte und dem Rollsegment.

Prinzipiell kann dafür jede beliebige, im Maschinenbau bekannte Verzahnung gewählt werden. Für eine größtmögliche Unempfindlichkeit gegenüber Verunreinigungen und für eine wirtschaftliche Produktion bevorzugt die Erfindung jedoch eine möglichst einfache und robuste Konstruktion: In das Rollsegment soll wenigstens eine Verzahnungsöffnung oder Verzahnungsvertiefung eingeformt werden. Da hinein ragt jeweils eine Verzahnungserhöhung, die auf der Abrollplatte angebracht oder angeformt ist. Vorzugsweise sind diese Erhöhungen als Kegelstumpf oder als Kugelsegment geformt, weil sie im Vergleich zu kantigen Formen einfacher produzierbar sind. Sie können dann auch Verunreinigungen durch die Verzahnungsöffnungen im Rollsegment hindurch drücken.

Die reduzierte Bauhöhe einer erfindungsgemäßen Stütze ermöglicht die Montage an der Unterseite des Fahrzeugrahmens. Die bisher übliche, seitliche Befestigung mit ihrem hohen Aufwand kann eingespart werden. Dazu kann der Fahrzeugrahmen auf der Oberkante des äußeren Stützenrohrs aufliegen. Alternativ kann auch ein Deckel die Oberseite des äußeren Stützenrohrs verschließen und den Fahrzeugrahmen tragen. Dann reicht eine Klemmbefestigung, welche die Stützvorrichtung lösbar mit dem Untergurt des Rahmenlängsträgers verbindet. Es können z.B. eine einzige oder zwei Stück U-förmige Halteklammern an den Deckel oder das äußere Stützenrohr angeformt oder angebaut werden, die den Untergurt umschließen und mit einer Klemmbefestigung auf dem Untergurt gesichert werden.

Um Lackschäden am Untergurt des Fahrzeugrahmens zu vermeiden, ist es sinnvoll, einen korrosionsschützenden Materialstreifen - z.B. aus Zinkblech - zwischen die Lagerschalen zu legen und die Enden der Klemmschrauben z.B. mit verdrehbaren und korrosionsschützenden Drucktellern zu versehen.

Eine gleichartige Klemmbefestigung kann auch zur Befestigung von diagonal ausgerichteten Stützprofilen an den Untergurten angewendet werden. Alternativ kann die Klemmbefestigung soweit verlängert werden, dass sie die diagonalen Stützprofile mit trägt. Hierdurch kann die Anzahl der Klemmschrauben reduziert werden. Alternativ können auch Knotenbleche zwischen dem äußeren Stützenrohr und der Klemmvorrichtung integriert werden. Diese Ausführung ist für eine Montage im vorderen Teil der üblichen Profile von Fahrzeugrahmen geeignet, deren Profilhöhe unmittelbar vor der Stütze in Richtung zur Sattelplatte abnimmt.

An Sattelanhängern mit niedriger Höhe des Fahrzeugrahmens, wie z.B. Tiefladern, kann die Klemmbefestigung auch seitlich an den Stützen angebracht werden, so dass die Stütze wie bisher üblich an der Seite des Fahrzeugrahmens angeordnet ist. Alternativ kann eine erfindungsgemäße Stütze - wie bisher üblich - mittels Lochplatten und Schraubverbindungen befestigt werden.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Fig. 1a:: Sattelanhänger mit Sattelzugmaschine und eingeschobener Stütze im Fahrbetrieb.
- Fig. 1b:: Sattelanhänger wie Figur 1a, jedoch ohne Sattelzugmaschine im abgestellten Zustand mit ausgeschobener Innenstütze und verschwenktem Stützenunterteil.
- Fig. 2a:: Stütze wie in Figur 1b, jedoch mit noch weiter ausgeschobener Innenstütze.
- Fig. 2b:: Stütze wie in Figur 1a, also mit eingeschobener Innenstütze, jedoch mit nur einseitigem Stützprofil.
- Fig. 3:: Schnitt in Fahrtrichtung durch Stütze wie in Figur 1b und 2a.
- Fig. 4:: Schnitt quer zur Fahrtrichtung durch Stütze ähnlich wie Figuren 1b, 2a, und 3.

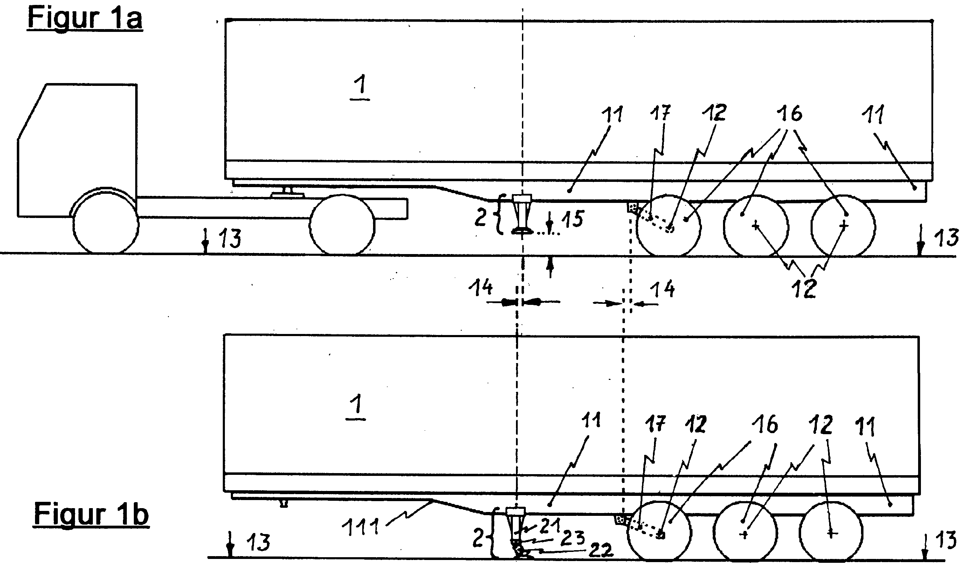

Die **Figur 1a** zeigt einen Sattelanhänger (1) mit einer Sattelzugmaschine auf einer Abstellfläche (13) in Seitenansicht. Mit seinem vorderen Teil liegt der Sattelanhänger (1) auf der Sattelzugmaschine auf, befindet sich also im Zustand des Fahrbetriebs. An der Unterseite des Sattelanhängers (1) ist der Fahrzeugrahmen (11) zu sehen, an dessen Profil im vorderen Bereich eine erfindungsgemäße Stütze (2) befestigt ist. Die Stütze (2) ist in Figur 1 a eingefahren, so dass sie zur Abstellfläche (13) die Bodenfreiheit (15) aufweist. Am hinteren Teil des Fahrzeugrahmens (11) sind die Fahrzeugachsen (12) mit je zwei Laufrädern (16) jeweils mittels zweier Längslenker (17) verbunden. In Figur 1 sind von jeder Fahrzeugachse (12) nur das zum Betrachter weisende Laufrad (16) und ein Längslenker(17) sichtbar. Diese Längslenker (17) sind mit - in Figur 1a nicht dargestellten - Luftfederbälgen gegen den Fahrzeugrahmen (11) abgestützt.

In Figur 1b ist der gleiche Sattelanhänger (1) wie in Figur 1a gezeichnet. Die Sattelzugmaschine ist jedoch abgekuppelt und der vordere Teil des Sattelanhängers (1) wird durch die Stütze (2) gehalten. Aus dem äußeren Stützenrohr (21) ist die Innenstütze (22) heraus geschoben und in eine geneigte Stellung verschwenkt. In Figur 1b ist gut nachvollziehbar, weshalb diese Neigung erforderlich geworden ist: Die - in Figur 1b nicht eingezeichneten - Luftfederbälge sind wegen längerer Standzeit - zulässiger Weise - in sich zusammen gesackt, so dass sich auch der hintere Teil des Sattelanhängers (1) abgesenkt und die Position des Sattelanhängers in Fahrtrichtung versetzt hat, weil die gebremsten Laufräder (16) auf der Abstellfläche (13) in Fahrtrichtung gerollt sind. In der Praxis kann dieser Positionsversatz (14) bis zu 15 cm betragen. Dabei ist auch der Befestigungspunkt der Stütze (2) am Fahrzeugrahmen (11) um den Positionsversatz (14) verschoben. Das ist in Figur 1b auch daran zu erkennen, dass die Längslenker (17) gegenüber ihrer Aufhängung am Fahrzeugrahmen (11) im Vergleich zu Figur 1a eine geringere Neigung haben und somit die Laufräder (16) den Fahrzeugrahmen (11) weiter überdecken als in Figur 1 a.

Der Positionsversatz (14) gegenüber der Abstellfläche (13) wird von der erfindungsgemäßen Stütze (2) ausgeglichen, indem sie reversibel "abknicken" kann.

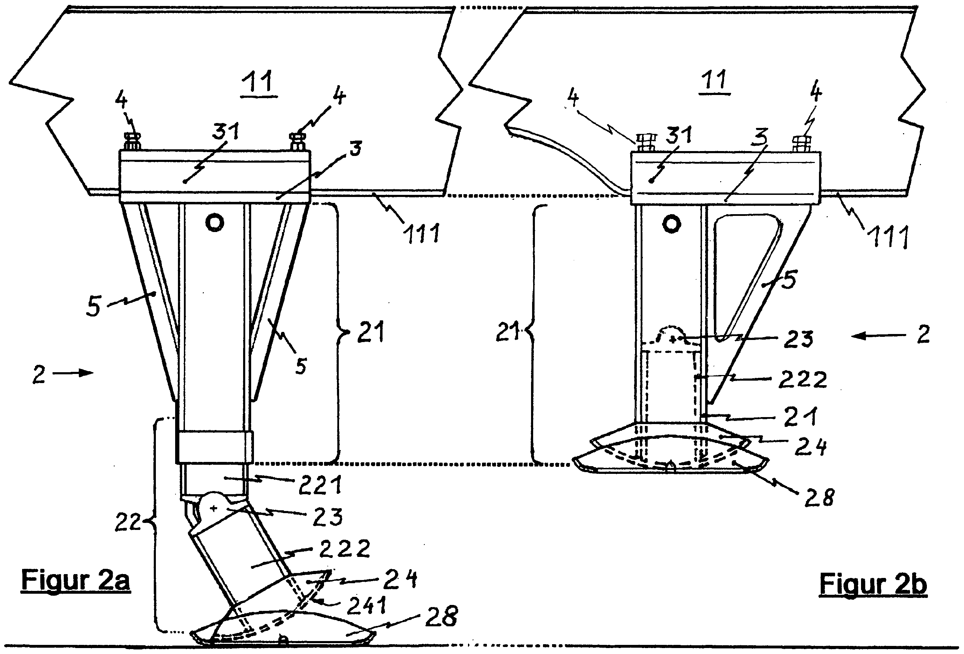

Um diese abknickende Bewegung - und eine anschließende Umkehrung - zu ermöglichen, ist bei einer erfindungsgemäßen Stütze (2) in die Innenstütze (22) das Schwenklager (23) eingebaut. Dass dieses Schwenklager (23) die Innenstütze (22) in das Stützenoberteil (221) und das Stützenunterteil (222) aufteilt, ist in Figur 1b nur undeutlich zu erkennen, jedoch sehr deutlich in Figur 2a.

In **Figur 2a** ist die Stütze (2) ähnlich wie in Figur 1b in Parkstellung, also mit heraus geschobener Innenstütze (22) bei vollzogenem Positionsversatz (14) gezeichnet. Dadurch ist gut sichtbar, dass die Innenstütze (22) durch das Schwenklager (23) in das Stützenoberteil (221) und das Stützenunterteil (222) aufgeteilt ist. Im Unterschied zu Figur 1b ist die Innenstütze (22) jedoch fast vollständig herausgeschoben. Nur der zur mechanischen Stabilität mindestens erforderliche Abschnitt des Stützenoberteils (221) befindet sich noch innerhalb des äußeren Stützenrohrs (21).

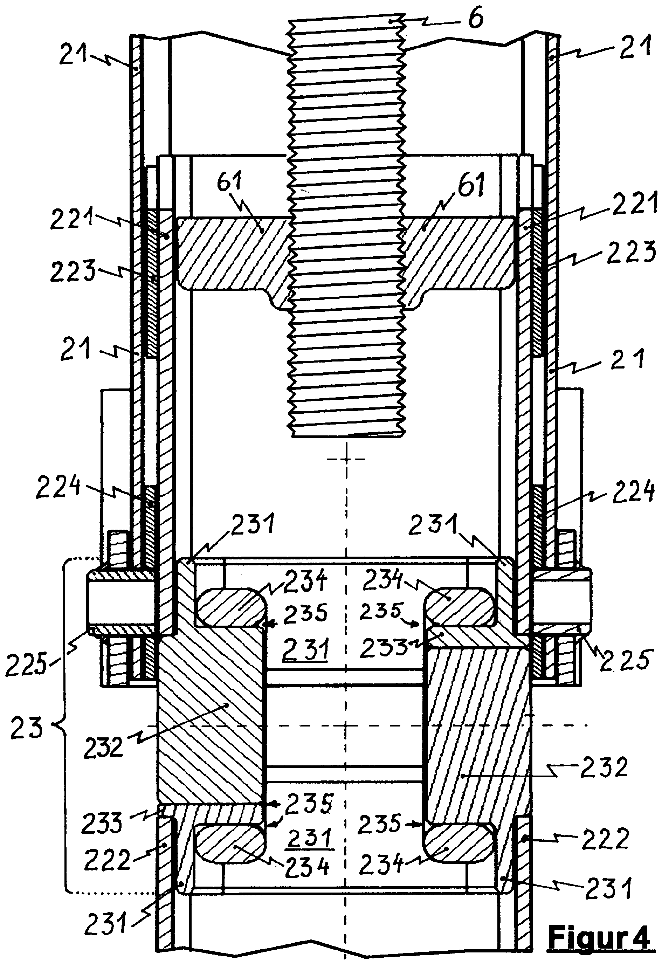

Die Figur 2a zeigt auch plausibel, dass das Stützenoberteil (221) und das Stützenunterteil (222) das gleiche Profil aufweisen. Nicht in Figur 2a sondern nur in Figur 4 ist gut sichtbar, dass das Schwenklager (23) auch in Richtung seiner Achse nicht über dieses Profil hinausragt, sodass alle drei Teile der Innenstütze (22) in das äußere Stützenrohr (21) hinein geschoben werden können, wie es in Figur 2b dargestellt ist.

Unten in Figur 2a ist mit gestrichelten Linien eingezeichnet, wie das Stützenunterteil (222) in das Rollsegment (24) hineinragt und dabei die Seitenwand des Rollsegmentes (24) überlappt. Aus den Figuren 2a und 2b ist nicht direkt abzulesen, dass diese Seitenwand dem Betrachter näher ist als die Außenfläche des Stützenunterteils (222) und eine Gasse dazwischen frei bleibt.

**Figur 2b** zeigt dieselbe Stütze (2) wie in Figur 2a, jedoch ohne das eingeschobene Stützenoberteil (221), aber mit dem eingeschobenen Schwenklager (23) und dem eingeschobenem Stützenunterteil (222) - jeweils gestrichelt eingezeichnet.

Nicht mehr sichtbar - und deshalb auch gestrichelt - ist das untere Ende des äußeren Stützrohrs (21), weil es in den gassenartigen Zwischenraum zwischen der Seitenwand des Rollsegmentes (24) und dem Stützenunterteil (222) eingetaucht ist.

In den Figuren 2a und 2b ist unterhalb des Rollsegmentes (24) jeweils die Abrollplatte (28) dargestellt, auf der sich das Rollsegment (24) mit seiner Abrollfläche (241) abrollt. In Figur 2a berührt die Abrollfläche (241) den linken Teil der Abrollplatte (28), in Figur 2b die Mitte der Abrollplatte (28).
Durch den Vergleich der Figuren 2a und 2b wird deutlich, dass die drei Elemente der Innenstütze (22), nämlich das Stützenoberteil (221), das Schwenklager (23) und das Stützenunterteil (222) vollständig in das äußere Stützenrohr (21) hinein geschoben werden können, was eine gestrichelte Linie zwischen den Figuren 2a und 2b verdeutlicht.

In den Figuren 2a und 2b ist die Stütze (2) unterhalb des Fahrzeugrahmens (11) montiert. Dazu ist oben auf dem äußeren Stützenrohr (21) ein Deckel (3) befestigt, der auf der Unterseite des Untergurtes (111) vom Fahrzeugrahmen (11) aufliegt. Sowohl der plattenförmige Deckel (3) als auch der streifenförmige Untergurt (111) sind in den Figuren 2a und 2b mit ihren Großflächen senkrecht zur Zeichenebene ausgerichtet und zeigen in den Figuren 2a und 2b deshalb nur ihre Stirnkanten.

In den Figuren 2a und 2b ist ebenfalls nur zu einem Teil sichtbar, wie die Halteklammern (31) an den Deckel (3) angeformt sind und den Untergurt (111) U-förmig umfassen. Gut erkennbar sind hingegen die Klemmvorrichtungen (4), die die Halteklammern (31) von unten her an den Untergurt (111) andrücken.

In den Figuren 2a und 2b ist als eine mögliche Ausführungsvariante dargestellt, wie der Deckel (3) und die daran angeformte oder damit verbundene Halteklammer (31) über den Querschnitt des äußeren Stützenrohrs (21) hinaus verlängert sind und wie auf diesen Verlängerungen Stützprofile (5) befestigt sind, die in geneigtem Verlauf das äußere Stützenrohr (21) und den Deckel (3) miteinander verbinden. Figur 2a zeigt eine Variante, bei der der Deckel (3) über beide Seiten hinaus verlängert ist und auf beiden Seiten je ein Stützprofil (5) angesetzt ist. Figur 2b zeigt eine andere Ausführungsvariante der Abstützung mit nur einem Stützprofil (5), das hier als ein Knotenblech ausgebildet ist. Eine solche einseitig abgestützte Ausführung ist besonders dann vorteilhaft, wenn die Stütze(2) unmittelbar hinter der in Richtung der Sattelplatte - in Figur 2b links - beginnenden Verjüngung des Fahrzeugrahmens (11) montiert werden soll.

In den Figuren 2a und 2b ist gut nachvollziehbar, dass dadurch die Knickfestigkeit der Befestigung der Stütze (2) in oder gegen die Fahrtrichtung des Sattelanhängers (1) deutlich erhöht wird.

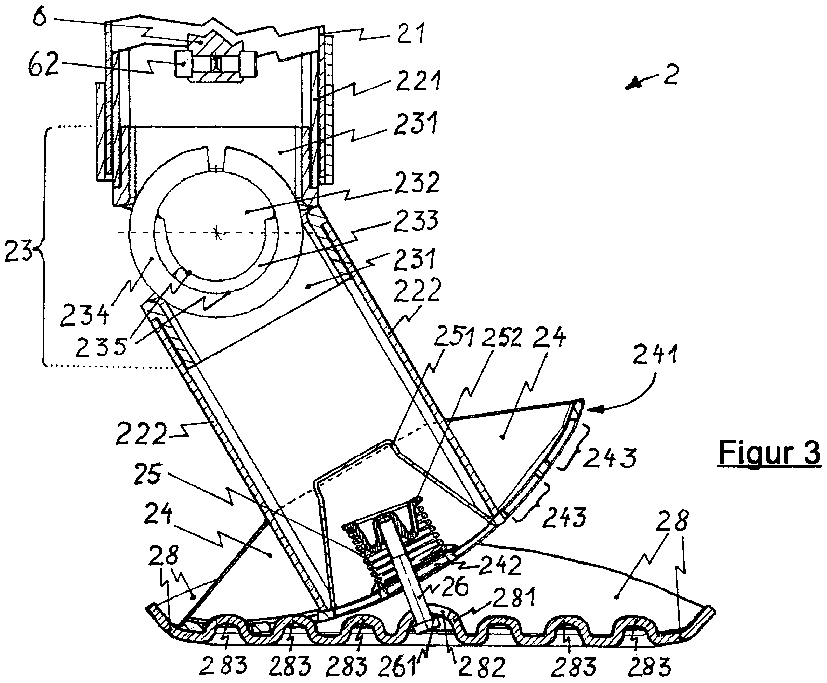

In **Figur 3** ist von der in Figur 2a dargestellten Stütze 2 die untere Hälfte zeichnerisch aufgeschnitten, wobei die Schnittebene in Fahrtrichtung des Sattelanhänger verläuft. Oben in Figur 3 sind vom äußeren Stützenrohr (21) jeweils ganz außen die Wände als schmale Schnittflächen zu sehen. Die Schnittflächen einer verstärkenden Manschette umgeben deren Außenflächen. Auf der Innenfläche liegt das Stützenoberteil (221) an und gleitet beim Ein- und Ausfahren darauf in vertikaler Richtung.

In das untere Ende des Stützenoberteils (221) ist das obere Teil des Schwenklagers (23) eingesteckt und in das obere Ende des Stützenunterteils (222) ist das untere Teil des Schwenklagers (23) eingesteckt, dessen Mittelachse in Figur 3 auf den Betrachter zuweist. Eine weitere Schnittzeichnung durch ein baugleiches Schwenklager (23) senkrecht zu der Schnittebene von Figur 3 ist in Figur 4 enthalten.

**Figur 4** zeigt, dass das Schwenklager (23) aus zwei schmalen Gelenkteilen besteht, zwischen denen sich die Gewindespindel (6) hindurch bewegen wird, wenn das Stützenoberteil (221) und das Stützenunterteil (222) in das äußere Stützenrohr (21) eingeschoben werden.

Die Gewindespindel (6) in der Ausführungsform gemäß Figur 3 weist an ihrem unteren Ende einen überkragenden Anschlag (62) auf, der den maximalen Hub der Stütze (2) beschränkt. In Figur 4 ist eine andere Ausführungsform der Gewindespindel (6) ohne einen solchen Anschlag (62) dargestellt.

Die Figuren 3 und 4 zeigen das Schwenklager (23) jeweils in derselben Ausführungsform als Gleitlager. Es besteht aus zwei zueinander identischen Teilen, die in die quadratischen Profile des Stützenoberteils (221) und des Stützenunterteils (222) eingesteckt sind. Jedes dieser Teile besteht aus einem Halterungsabschnitt (231) mit der Form eines quadratischen Rahmens, der jeweils in ein Stützenteil (221, 222) eingesteckt ist. An jeden Halterungsabschnitt (231) ist je ein voluminöser Lagerstummel (232) angeformt, der in einer dazu komplementären und konzentrischen Lagerschale (233) gleitet, die an den jeweils anderen Halterungsabschnitt (231) angeformt ist. In Figur 3 weist ihre Mittelachse auf den Betrachter zu; in Figur 4 sind beide Teile entlang ihrer Mittelachse geschnitten dargestellt.

Die Außenseite je eines Lagerstummels (232) und die Außenseite je einer Lagerschale (233) bilden zusammen einen großen Zylinder, dessen Radius beim Verschwenken der beiden Halterungsabschnitte (231) gegeneinander konstant bleibt und dessen Mittelachse auf der Mittelachse des Schwenklagers (23) verläuft. Deshalb kann je ein Haltering (234) einen Lagerstummel (232) und eine Lagerschale (233) zusammen halten, wenn das Stützenunterteil (222) verschwenkt wird und ein Lagerstummel (232) und eine Lagerschale (233) auf den Lagerflächen (235) gleiten.

In Figur 3 ist sehr gut zu erkennen, wie der untere Halterungsabschnitt (231) in das Stützenunterteil (222) eingesteckt und dadurch fest mit ihm verbunden ist. Die beiden Halterungsabschnitte (231) sind also - im geraden Zustand der Innenstütze (22) - um 180° gegeneinander verschwenkt ausgerichtet.

Am unteren Ende des Stützenunterteils (222) ist das Rollsegment (24) befestigt. Gut zu erkennen ist in Figur 3 die kreisbogenförmige Abrollfläche (241) des Rollsegments (24), die über das Stützenunterteil (222) zu beiden Seiten herausragt.

In Figur 3 ist der Zustand einer maximalen Abknickung zwischen dem Stützenunterteil (222) und dem Stützenoberteil (221) dargestellt. In diesem Zustand lastet die gesamte Gewichtskraft auf dem linken Ende der Abrollfläche (241). Damit dieser Endbereich nicht überlastet wird und abknickt, ist er durch eine vertikal darauf befestigte oder angeformte Seitenwand verstärkt. Von dieser Seitenwand sind in Figur 3 zwei dreieckige Abschnitte zu sehen. Sehr wichtig ist, dass diese dreieckigen Abschnitte **nicht** mit dem Stützenunterteil (222) verbunden sind, sondern vielmehr im Abstand dazu eine einzige, durchlaufende Seitenwand bilden, deren nicht sichtbarer Teil gestrichelt dargestellt ist. Von hoher Bedeutung für die Erfindung ist, dass in den gassenartigen Zwischenraum zwischen dieser Seitenwand und dem Stützenunterteil (222) bei voll eingeschobenem Stützenunterteil (222) das äußere Stützenrohr (21) eintaucht.

Im unteren Teil der Figur 3 ist sehr gut zu erkennen, wie das Rollsegment (24) auf der Abrollplatte (28) abrollt. In der hier dargestellten Schnittebene ist die Abrollfläche (241) relativ klein, da sie in der Mitte von der Öffnung (242) und zu beiden Seiten von jeweils drei Verzahnungsöffnungen (243) durchbrochen ist. Vor und hinter der Schnittebene schließen sich jedoch durchgehend geschlossene Bereiche der Abrollfläche (241) an.

In jede Verzahnungsöffnung (243) taucht bei entsprechender Winkelstellung des Stützenunterteils (222) wenigstens eine Verzahnungserhöhung (283) von der Abrollplatte (28) ein. In Figur 3 ist gut zu erkennen, wie die zwei links angeordneten Verzahnungserhöhungen (283) in zwei Verzahnungsöffnungen (243) hineinragen. Dadurch wird das Rollsegment (24) beim Abrollen in jeder Winkelstellung zwangsweise geführt und kann in keiner Richtung gegenüber der Abrollplatte (28) verrutschen. Das ist die einzige und dadurch entscheidend wichtige Führung für das Rollsegment (24) auf der Abrollplatte (28), weil die Seitenwände des Rollsegmentes (24) und der Abrollplatte (28) zueinander beabstandet sind, damit in diesen Zwischenraum das untere Ende des äußeren Stützenrohrs (21) im eingefahrenen Zustand hineinpasst.

In der Mitte des Rollsegmentes (24) durchbricht die Öffnung (242) die Abrollfläche (241). Diese Öffnung (242) schafft den Bewegungsspielraum für die federnd gelagerte Zugstange (26), die die Abrollplatte (28) mit dem Rollsegment (24) verbindet. Außerdem ermöglicht die Öffnung (242) das Eintauchen der kalottenförmigen Auswölbung (281), wenn die Stütze (2) entlastet wird und die Abrollplatte (28) in ihre Ausgangsposition zurück gezogen wird.

In Figur 3 ist nicht dargestellt, wie die Zugstange (26) die unbelastete Abrollplatte (28) beim Fahren oder beim Einziehen gegen Abfallen sichert. Stattdessen ist ein belasteter Zustand gezeigt, bei dem die Zugstange (26) an ihrem linken Anschlag angelangt ist und zwar innerhalb des Schlitzes (282) in der kalottenförmigen Auswölbung (281), in der der Kugelkopf (261) der Zugstange (26) hin- und her gleiten kann. Bei der in Figur 3 gezeigten Variante besteht der Kugelkopf (261) aus einem zylindrischen Kopf an der Zentralschraube (26), auf den eine ringförmige Kugelauflage aufgeschoben ist. Als eine andere - hier nicht gezeigte - Variante kann die Kugelauflage auch einstückig an den Schraubenkopf angeformt werden. Dadurch kann sich die Zentralschraube (26) etwa synchron zur jeweiligen Winkelposition des Stützenunterteils (222) bewegen und ragt stets durch die Öffnung (242) in das Innere des Rollsegmentes (24) hinein.

Dort ist sie mit dem Gewindedeckel (252) verschraubt, der auf der vorgespannten Druckfeder (25) aufliegt. Die in Figur 3 gezeigte Ausführung des Gewindedeckels (252) als beispielsweise quadratisches Blechpressteil weist einen Zentrierkegel auf, mit dessen äußerer Flanke sich der Gewindedeckel (252) in der als Schraubenfeder gestalteten Druckfeder (25) zentriert. Dadurch ist sichergestellt, dass der Gewindedeckel (252) auch bei extremer Verformung der Druckfeder (25) stets formschlüssig darauf aufliegt.

In Figur 3 ist sehr gut nachvollziehbar, wie der Gewindedeckel (252) die Wirkungsrichtung der Kraft der Druckfeder (25) umkehrt und in eine Zugkraft überträgt, mit der die Zentralschraube (26) die Abrollplatte (28) an das Rollsegment (24) heranzieht.
In Figur 3 ist auch die Brücke (251) gut zu sehen und nachvollziehbar, wie sie als Montagehilfe für den Gewindedeckel (252), die Druckfeder (25), und die Zentralschraube (26) dient: Da die Druckfeder (25) mit einer Vorspannung eingesetzt werden soll, wird bei der Montage zuerst der Gewindedeckel (252) in die Druckfeder (25) eingelegt. Dann werden beide soweit zusammen gepresst, dass sie seitlich unter die Brücke (251) geschoben werden können. Bei diesem - in Figur 3 nicht dargestellten - Zustand wird der Gewindedeckel (252) gegen den mittleren Teil der Brücke (251) gedrückt. In Figur 3 ist ersichtlich, dass der Gewindedeckel (252) die gleiche Breite hat wie der mittlere Teil der Brücke (251). Dadurch liegen die beiden Kanten des beispielsweise quadratischen Gewindedeckels (252) in den Ecken der abgewinkelten Brücke (251).

In Figur 3 ist nicht darstellbar, dass diese beiden Kanten parallel zueinander verlaufende Graden sind, weil sie auf den Betrachter zuweisen. Ebenfalls in Figur 3 nicht unmittelbar sichtbar ist, dass die Brücke (251) aus einem abgewickelten Flacheisen besteht, in dessen Ecken bei der Montage die beiden parallelen Kanten des Gewindedeckels (252) anliegen. Dadurch wirkt die Brücke (251) wie ein Gabelschlüssel auf die beiden parallelen Kanten des Gewindedeckels (252) und hält ihn in dieser Position, wenn die Zentralschraube (26) in den Gewindedeckel (252) eingeschraubt wird.

In **Figur 4** wird eine Stütze (2) ähnlich wie in den Figuren 1b, 2a und 3 gezeigt, jedoch noch nicht vollständig ausgeschoben. Im Unterschied zu Figur 3 verläuft die Schnittebene in Figur 4 quer zur Fahrtrichtung. Ebenso wie in Figur 3 ist auch in Figur 4 oben die Gewindespindel (6) dargestellt, hier jedoch ohne die Anschlagbegrenzung (62) an ihrem unteren Ende. Deshalb muss die Gewindespindel (6) in der Version gemäß Figur 4 nur so lang sein, dass im vollständig ausgefahrenen Zustand das Ende der Gewindespindel (6) noch in das Gewindelager (61) eingreift, an dem das Stützenoberteil (221) befestigt ist. Bei dieser Ausführungsform entfällt also die Verlängerung der Gewindespindel (6) für die Anschlagbegrenzung (62). Weil die Gewindespindel (6) dadurch kürzer ist, wird auch die gesamte Bauhöhe der Stütze (2) verkleinert, was im Sinne der Aufgabenstellung dieser Erfindung ist.

Bei dieser Ausführung ist eine Anschlagbegrenzung an anderer Stelle erforderlich. In Figur 4 ist gut zu erkennen, dass das Stützenoberteil (221) zum äußeren Stützenrohr (21) beabstandet ist. Diesen Zwischenraum überbrücken die beiden Führungshülsen (223, 224). Die obere Führungshülse (223) ist fest mit dem Stützenoberteil (221) verbunden und gleitet mit ihrer Außenfläche im äußeren Stützenrohr (21). Die untere Führungshülse (224) gleitet auf der Außenfläche des Stützenoberteils (221), des Lagerstummels (232) sowie des Stützenunterteils (222) und ist mit dem äußeren Stützenrohr (21) verbunden.

In Figur 4 ist gut nachvollziehbar, dass sich durch Verdrehen der Gewindespindel (6) das Gewindelager (61) nach unten bewegt, womit sich auch das fest damit verbundene Stützenoberteil (221) absenkt sowie die ebenfalls fest damit verbundene, obere Führungshülse (223) nach unten bewegt.

Figur 4 verdeutlicht, dass die Abwärtsbewegung der oberen Führungshülse (223) dadurch begrenzt wird, dass ihre Stirnkante auf die Stirnkante der unteren Führungshülse (224) auftrifft. Die untere Führungshülse (224) dient also als Anschlag für die obere Führungshülse (223).

Bei der Montage der Stütze (2) muss im ersten Schritt das Stützenoberteil (221) mitsamt der darauf befestigten, oberen Führungshülse (223) und den anderen, daran befestigten Teilen der Innenstütze (22) in das äußere Stützenrohr (21) eingesteckt werden. Das ist nur dann möglich, wenn die untere Führungshülse (224) erst im zweiten Schritt in das äußere Stützenrohr (21) eingesteckt wird.

Um an dieser Stelle als Anschlag für die obere Führungshülse (223) dienen zu können, muss die untere Führungshülse (224) im dritten Schritt eine solide Verankerung in dem äußeren Stützenrohr (21) bekommen. In der Ausführungsform gemäß Figur 4 sind zu diesem Zweck in die untere Führungshülse (224) und das äußere Stützenrohr (21) radiale Bohrungen eingebracht worden, in die jeweils ein Hülsenträger (225) eingesteckt wird. Grundsätzlich bevorzugt die Erfindung für die untere Führungshülse (224) eine lösbare Verbindung, wofür auch andere, mechanische Verbindungen wie Schrauben, Bolzen oder Klemmungen möglich sind.

In Figur 4 ist im unteren Teil das Schwenklager (23) in der gleichen Ausführung wie in der Figur 3 dargestellt. Das Stützenoberteil (221) und das Schwenklager (23) und das Stützenunterteil (222) haben jeweils einen quadratischen Querschnitt. Andere - hier nicht dargestellte - Querschnitte, wie z.B. ein Rechteck, sind alternativ frei wählbar.

Vom Schwenklager (23) sind in Figur 4 die beiden Halterungsabschnitte (231) zu sehen, von denen das erste in das Stützenoberteil (221) eingesteckt ist und das zweite in das Stützenunterteil (222). An den oberen Halterungsabschnitt (231) ist links der voluminöse Lagerstummel (232) und rechts die schlankere Lagerschale (233) angeformt. Ebenso sind auch an dem unteren Halterungsabschnitt (231) je ein Lagerstummel (232) und eine Lagerschale (233) angeformt. Sie sind in Figur 4 jedoch in umgekehrter Reihenfolge sichtbar, weil die beiden Halterungsabschnitte (231) zwar identisch zueinander sind, in ihrer Anordnung jedoch um 180° gegeneinander versetzt sind. Dass die beiden Teile des Schwenklagers (23) identisch sind und nur zueinander versetzt montiert werden, hat den Vorteil der Gleichteile.

In Figur 4 ist die - hier nicht gezeichnete - Alternative nachvollziehbar, dass es bei bei größeren Stückzahlen auch sinnvoll sein kann, für das Schwenklager (23) ein Oberteil herzustellen, das die beiden Lagerstummel (232) aufweist und ein Unterteil, das die beiden Lagerschalen (233) aufweist, insbesondere dann, wenn sie als Schmiede- oder Fließpressteile geformt werden sollen.

Insgesamt zeigen die Figuren 1a bis 4 dass eine erfindungsgemäße Stütze (2) mit den hier geschilderten Merkmalen die Bauhöhe des Gesamtsystems minimiert und die Nachteile der bisher bekannten Stützen wie hohen Platzbedarf, hohen Materialbedarf und hohe Materialkosten sowie hohes Systemgewicht und aufwendige Montage verbessert. Zusätzlich werden die bisherigen "Klappergeräusche" der unbelasteten Stütze (2) während der Fahrt eliminiert.

### Bezugszeichenliste

- 1: Sattelanhänger
- 11: Fahrzeugrahmen des Sattelanhängers 1
- 111: Untergurt des Fahrzeugrahmens 11
- 12: Fahrzeugachse eines Laufrades 16 an einem Längslenker 17
- 13: Abstellfäche für Sattelanhänger 1
- 14: Positionsversatz des Sattelanhängers 1
- 15: Bodenfreiheit des Sattelanhängers 1
- 16: Laufräder an Fahrzeugrahmen 11
- 17: Längslenker, verbinden Laufräder 16 mit Fahrzeugrahmen 11
- 2: Stütze am Sattelanhänger 1
- 21: äußeres Stützenrohr der Stütze 2
- 22: Innenstütze der Stütze 2
- 221: Stützenoberteil der Innenstütze 22
- 222: Stützenunterteil der Innenstütze 22
- 223: obere Führungshülse zwischen Stützenoberteil 221 und äußerem Stützenrohr 21
- 224: untere Führungshülse an der Innenseite des äußeren Stützenrohrs 21
- 225: Hülsenträger für die untere Führungshülse 224
- 23: Schwenklager der Innenstütze 22
- 231: Halterungsabschnitt des Schwenklagers 23
- 232: Lagerstummel am Halterungsabschnitt 231
- 233: Lagerschale am Halterungsabschnitt 231
- 234: Haltering, umschließt Lagerstummel 232 u. Lagerschale 233
- 235: Lagerflächen zwischen Lagerstummel 232, Lagerschale 233 und Haltering 234
- 24: Rollsegment am Stützenunterteil 222
- 241: Abrollfläche am Rollsegment 24
- 242: Öffnung in Abrollfläche 241
- 243: Verzahnungsöffnungen in Abrollfläche 241
- 25: Druckfeder zwischen Rollsegment 24 und Gewindedeckel 252
- 251: Brücke im Stützenunterteil 222
- 252: Gewindedeckel auf Druckfeder 25
- 26: Zugstange
- 261: Kugelkopf an Zugstange 26
- 27: unbenutztes Bezugszeichen
- 28: Abrollplatte zum Abrollen des Rollsegments 24
- 281: kalottenförmige Auswölbung in Abrollplatte 28
- 282: Schlitz in Abrollplatte 28
- 283: Verzahnungserhöhungen auf Abrollplatte 28
- 3: Deckel auf äußerem Stützenrohr 21
- 31: Halteklammern an Deckel 3
- 4: Klemmvorrichtung an Deckel 3
- 5: Stützprofil zwischen Deckel 3 u. äußerem Stützenrohr 21
- 6: Gewindespindel, zieht die Innenstütze 22 in das äußere Stützenrohr 21
- 61: Gewindelager im Stützenoberteil 221 für Gewindespindel 6
- 62: Anschlag zur Hubbegrenzung

## Patentansprüche

1. Stütze (2) zur Unterstützung und zum Ausgleich eines Positionsversatzes von einem geparkten Sattelanhänger (1), bestehend aus
- einem äußeren Stützenrohr (21) und
- einer Innenstütze (22),
- die teleskopisch in das äußere Stützenrohr (21) einschiebbar ist, **dadurch gekennzeichnet, dass** die Innenstütze aus einem Stützenoberteil (221) und einem Stützenunterteil (222) besteht, die über ein Schwenklager (23) gelenkig miteinander verbunden sind, wobei
das untere Ende des Stützenunterteils (222) starr mit einem Rollsegment (24) verbunden ist und
die Außenfläche des äußeren Stützenrohrs (21) zumindest an der zur Innenstütze (22) weisenden Kante vollumfänglich geschlossen ist wobei
- das Rollsegment (24) wannenartig geformt ist und
- im eingefahrenen Zustand der Stütze (2) das äußere Stützenrohr (21) in das Rollsegment (24) hineinragt.

2. Stütze (2) nach Anspruch 1 , **dadurch gekennzeichnet, dass** am tiefsten Punkt der konkav geformten Seite des wannenartigen Rollsegmentes (24) das Stützenunterteil (222) befestigt ist und zwischen dem Stützenunterteil (222) und den Seitenwänden des Rollsegmentes (24) eine Gasse frei ist.

3. Stütze (2) nach einem der vorhergehenden Ansprüche, **dadurch gekennzeichnet, dass**
- das Schwenklager (23) aus mindestens zwei Gelenkteilen besteht, die zueinander beabstandet sind und
- eine Gewindespindel (6) oder ein anderer Antrieb zum Verschieben der Innenstütze (22) zwischen den beiden Gelenkteilen hindurch geführt werden kann.

4. Stütze (2) nach Anspruch 3, **dadurch gekennzeichnet, dass**
- die Gewindespindel (6)
- am oberen Ende des äußeren Stützenrohrs (21) drehbar gelagert ist und
- in ein Gewindelager (61) eingreift, das mit dem oberen Ende des Stützenoberteils (221) fest verbunden ist und
- eine obere Führungshülse (223) auf der Außenseite des Stützenoberteils (221) nahe dessen oberem Ende befestigt ist und auf der Innenfläche des äußeren Stützenrohrs (21) gleitet und
- eine untere Führungshülse (224) auf der Innenseite des äußeren Stützenrohrs (21) nahe dessen unterem Ende vorzugsweise lösbar befestigt ist und auf den Außenflächen des Stützenoberteils (221) und des Stützenunterteils (222) gleitet,
- wobei die beiden Führungshülsen (223, 224) bei maximal ausgeschobenem Stützenoberteil (221) mit ihren Stirnkanten aufeinanderliegen.

5. Stütze (2) nach einem der vorhergehenden Ansprüche, **dadurch gekennzeichnet, dass** das Rollsegment (24) über eine Abrollplatte (28) auf der Abstellfläche (13) aufliegt und mindestens eine Druckfeder (25) die unbelastete Abrollplatte (28) an das Rollsegment (24) andrückt, wobei
- die Druckfeder (25)
- mit ihrem ersten Ende innerhalb des Stützenunterteils (222) auf der Innenseite des Rollsegmentes (24) aufliegt und
- mit ihrem zweiten Ende einen Gewindedeckel (252) oder eine andere Druckplatte trägt und
- eine Zugstange (26) an der Druckplatte befestigt ist, z.B. indem sie in ein Gewinde des Gewindedeckels (252) eingeschraubt ist und
- die Zugstange (26) durch eine Öffnung (242) im Rollsegment (24) hindurch ragt und
- die Zugstange (26) gelenkig mit der Abrollplatte (28) verbunden ist.

6. Stütze (2) nach Anspruch 5, **dadurch gekennzeichnet, dass** zur Verbindung der Zugstange (26) mit der Abrollplatte (28)
- in die Abrollplatte (28) eine kalottenförmige Auswölbung (281) eingeformt ist,
- welche von einem Schlitz (282) durchbrochen ist und
- welche bei unbelasteter Abrollplatte (28) in die Öffnung (242) des Rollsegmentes (24) hineinragt und
- die Zugstange (26)
- durch den Schlitz (282) hindurchragt und
- einen Kugelkopf (261) oder eine Kugelkopfauflage oder eine Kugelkopfunterlegscheibe trägt, der (die) komplementär zur konkaven Fläche der Auswölbung (281) geformt ist und auf dieser Fläche gleiten kann.

7. Stütze (2) nach den Ansprüchen 5 oder 6, **dadurch gekennzeichnet, dass**
- in das Rollsegment (24) wenigstens eine Verzahnungsvertiefung oder Verzahnungsöffnung (243) eingeformt ist und
- in die Abrollplatte (28) wenigstens eine Verzahnungserhöhung (283) eingeformt ist, die in jeweils eine Verzahnungsvertiefung oder eine Verzahnungsöffnung (243) des Rollsegmentes (24) hineinragt, wenn letzteres auf der Abrollplatte (28) abrollt, wobei
- zumindest eine Verzahnungserhöhung (283) wenigstens teilweise als Kegelstumpf oder als Kugelsegment geformt sein kann.

8. Stütze (2) nach wenigstens einem der Ansprüche 5 bis 7,
**dadurch gekennzeichnet, dass**
eine Brücke (251) zentral oberhalb der Öffnung (242) angeordnet ist, wobei
- die Brücke (251) im Stützenunterteil (222) oder auf der Innenseite des Rollsegmentes (24) befestigt ist und
- die zur Öffnung (242) weisende Unterseite der Brücke (251) komplementär zum Gewindedeckel (252) geformt ist und mit diesem formschlüssig verbindbar ist.

9. Stütze (2) nach wenigstens einem der vorhergehenden Ansprüche, **dadurch gekennzeichnet, dass**
- der Untergurt (111) des Fahrzeugrahmens (11) vom Sattelanhänger(1) direkt auf der Oberkante des äußeren Stützenrohrs (21) oder über einen Deckel (3) auf dieser Oberkante aufliegt, wobei
- an das äußere Stützenrohr (21) oder an den Deckel (3) mindestens eine U-förmige Halteklammer (31) und/oder eine andere Klemmvorrichtung (4) angeformt oder befestigt sein kann, die die Stütze (2) lösbar mit dem Untergurt (111) oder einem anderen Teil des Fahrzeugrahmens (11) verbindet.

## Claims

1. Support (2) for supporting and compensating a shift in the position of a parked semi-trailer (1), which support (2) consists of an outer support tube (21) and an inner support (22), which can be telescopically slid into at least a part of the outer support tube (21) and consists of a support middle part (221) and a support base part (222), said parts being hinged together by a pivot bearing (23), wherein the lower end of the support base part (222) is rigidly connected to a rolling segment (24) and the outer surface of the outer support tube (21) is fully closed along the periphery at least along the edge facing the inner support (22),
**characterized in that**
the rolling segment (24) has a dished shape and in the retracted state of the support (2) the outer support tube (21) protrudes into the rolling segment (24)

2. Support (2) according to claim 1,
**characterized in that**
at the lowest point of the concave side of the trough-shaped rolling segment (24) the support base part (222) is fixed and between the support base part (222) and the side walls of the rolling segment (24) an alley is free.

3. Support (2) according to one of the preceding claims
**characterized in that**
the pivot bearing (23) consists of at least two hinge parts which are spaced apart from each other and a threaded spindle (6) or another drive for moving the inner support (22) can be guided through the gap between the two hinge parts.

4. Support (2) according to claim 3,
**characterized in that**
the threaded spindle (6) is rotatably linked with the upper end of the outer support tube (21) and engaged with a threaded supporting plate (61), which is firmly connected with the upper end of the support middle part (221) and an upper guiding sleeve (223) is mounted on the outside and near of the end of the support middle part (221) and slides on the inner surface of the outer support tube (21) and
a lower guiding sleeve (224) is preferably releasably attached on the inside and near the lower end of the outer support tube (21) and slides on the outer surfaces of the support middle part (221) and the support base part (222), whereby the end edges of the two guiding sleeves (223, 224) lie on one another, if the support middle part (221) is extracted to its maximum.

5. Support (2) of according to the claim 1,
**characterized in that** the rolling segment (24) rests via a rolling plate (28) on the parking area (13) and at least one pressure spring (25) presses unloaded rolling plate (28) onto the rolling segment (24), whereby the pressure spring (25) with its first end rests within the support base part (222) on the inside of the rolling segment (24) and with its second end carries a threaded cap (252) or a pressure plate and
The pulling rod (26) extends through the opening (242) in the roller segment (24), and said pulling rod (26) is bolted into the threaded cap (252) or the pressure plate, and the pulling rod (26) is hinged to the rolling plate (28).

6. Support (2) of according to the claim 5,
**characterized in that** for connecting the pulling rod (26) with the rolling plate (28), in the rolling plate (28), a dome-shaped bulge (281) is formed, which is perforated by a slot (282) and which extends into the opening (242) of the rolling segment (24) if the rolling plate (28) is unloaded and said pulling rod (26) extends through said slot (282) and bears a ball head (261) or a ball head bearing or a ball shaped washer, which is shaped complementary to the concave surface of the bulge (281) and slides on its surface.

7. Support (2) of according to the claim 5,
**characterized in that**
in the rolling segment (24) at least one recess or hole (243) for a cog is formed and in the rolling plate (28) at least one cog (283) is formed, which cog (283) projects into a respective recess or hole (243) of the roller segment (24) when the latter rolls on the rolling plate (28), wherein
at least one cog (283) may be at least in part formed as a truncated cone or a spherical segment.

8. Support (2) of according to at least one of the claims 5 to 8, **characterized in that**
a bridge (251) is arranged above the opening (242) of roller segment (24), whereby
the bridge (251) is attached in the support base part (222) or on the inside of the rolling segment (24) and that underside of the bridge (251), which is oriented towards the opening (242) of the roller segment (24) is formed complementary to the threaded cap (252) and can be connected to it form-locking.

9. Support (2) of according to the claim 1,
**characterized in that**
the lower flange (111) of the vehicle frame (11) from the semi-trailer (1) rests directly on the upper edge of the outer support tube (21) or on a lid (3) on this upper edge, whereby to the outer support tube (21) or to the lid (3) can be integrally formed on or attached to at least one U-shaped retaining clip (31) and / or another else clamping device (4), which connects the support (2) releasably to the lower flange (111) or another part of the vehicle frame (11).

## Revendications

1. Béquille (2) pour soutenir et compenser un décalage de position d'une semi-remorque (1) parquée composée
- d'un tube de béquille (21) extérieur et
- d'une béquille intérieure (22),
- qui peut être rentrée de façon télescopique dans le tube de béquille (21) extérieur, **caractérisée en ce que** la béquille intérieure (22) est composée d'une partie supérieure de béquille (221) et d'une partie inférieure de béquille (222) qui sont reliées en articulation entre elles par un palier d'articulation (23), dans laquelle
l'extrémité inférieure de la partie inférieure de béquille (222) est reliée fixement à un segment de rouleau (24) et
la face extérieure du tube de béquille (21) extérieur est raccordée au moins sur tout le pourtour du bord orienté vers la béquille intérieure (22),
dans laquelle
- le segment de rouleau (24) est en forme de bac et
- lorsque la béquille (2) est rentrée, le tube de béquille (21) extérieur fait saillie dans le segment de rouleau (24).

2. Béquille (2) selon la revendication 1, **caractérisée en ce que** la partie inférieure de béquille (222) est fixée au point le plus profond du côté formé concave du segment de rouleau (24) en forme de bac, et une allée est libre entre la partie inférieure de béquille (222) et les parois latérales du segment de rouleau (24).

3. Béquille (2) selon l'une des revendications précédentes, **caractérisée en ce que**
- le palier d'articulation (23) est composé d'au moins deux parties d'articulation qui sont distantes l'une de l'autre et
- une tige filetée (6) ou un autre entraînement pour déplacer la béquille intérieure (22) peut être guidé(e) entre les deux parties d'articulation.

4. Béquille (2) selon la revendication 3, **caractérisée en ce que**
- la tige filetée (6)
- est placée rotative sur l'extrémité supérieure du tube de béquille (21) extérieur et
- se met en prise dans un palier fileté (61) qui est relié fixement à l'extrémité supérieure de la partie supérieure de béquille (221) et
- un manchon de guidage supérieur (223) est fixé sur le côté extérieur de la partie supérieure de béquille (221) près de son extrémité supérieure et glisse sur la surface intérieure du tube de béquille (21) extérieur et
- un manchon de guidage inférieur (224) est fixé de préférence séparable sur la face intérieure du tube de béquille (21) extérieur et glisse sur les surfaces extérieures de la partie supérieure de béquille (221) et de la partie inférieure de béquille (222),
- dans laquelle les deux manchons de guidage (223, 224) reposent l'un sur l'autre par leur bords avants lorsque la partie supérieure de béquille (221) est sortie au maximum.

5. Béquille (2) selon l'une des revendications précédentes, **caractérisée en ce que** le segment de rouleau (24) repose sur un plateau de déroulement (28) sur la plate-forme de stationnement (13) et au moins un ressort de compression (25) comprime le plateau de déroulement (28) non chargé sur le segment de rouleau (24), dans laquelle
- le ressort de compression (25)
repose sur le côté intérieur du segment de rouleau (24) par sa première extrémité à l'intérieur de la partie inférieure de béquille (222) et
- supporte un couvercle fileté (252) ou une autre plaque de compression par sa seconde extrémité et
- une barre d'attelage (26) est fixée à la plaque de compression, par exemple, **en ce qu'**elle est vissée dans un filetage du couvercle fileté (252) et
- la barre d'attelage (26) fait saillie à travers une ouverture (242) dans le segment de rouleau (24) et
- la barre d'attelage (26) est reliée en articulation au plateau de déroulement (28).

6. Béquille (2) selon la revendication 5, **caractérisée en ce que** pour relier la barre d'attelage (26) au plateau de déroulement (28)
- un soulèvement (281) en forme de calotte est formé dans le plateau de déroulement (28),
- lequel est interrompu par une fente (282) et
- lequel fait saillie dans l'ouverture (242) du segment de rouleau (24) lorsque le plateau de déroulement (28) n'est pas chargé et
- la barre d'attelage (26)
- fait saillie à travers la fente (282) et
- supporte une tête sphérique (261) ou un appui de tête ronde ou une rondelle de tête ronde qui est formé(e) de façon complémentaire à la surface concave du soulèvement (281) et peut glisser sur cette surface.

7. Béquille (2) selon la revendication 5 ou 6, **caractérisée en ce**
- **qu'**au moins un creux denté ou une ouverture dentée (243) est formé(e) dans le segment de rouleau (24) et
- au moins un rehaussement denté (283) est formé dans le plateau de déroulement (28), qui fait saillie dans respectivement un creux denté ou une ouverture dentée (243) du segment de rouleau (24) lorsque ce dernier se déroule sur le plateau de déroulement (28), dans laquelle
- au moins un rehaussement denté (283) peut être formé au moins partiellement en tant que tronc de cône ou segment sphérique.

8. Béquille (2) selon l'une des revendications 5 à 7, **caractérisée en ce qu'**un pont (251) est disposé de façon centrale au-dessus de l'ouverture (242), dans laquelle
- le pont (251) est fixé dans la partie inférieure de béquille (222) ou sur la face intérieure du segment de rouleau (24) et
- la face inférieure du pont (251) orientée vers l'ouverture (242) est formée de façon complémentaire au couvercle fileté (252) et peut être reliée par complémentarité de formes avec celui-ci.

9. Béquille (2) selon l'une des revendications précédentes, **caractérisée en ce que**
- la semelle inférieure (111) du châssis du véhicule (11) de la semi-remorque (1) repose directement sur le bord supérieur du tube de béquille (21) extérieur ou sur ce bord supérieur par le biais d'un couvercle (3), dans laquelle
- au moins une fixation de retenue (31) en U et/ou un autre dispositif de serrage (4) peut être formé(e) ou fixé(e) sur le tube de béquille (21) extérieur ou sur le couvercle (3), qui relie la béquille (2) de façon séparable à la semelle inférieure (111) ou à une autre partie du châssis du véhicule (11).
